# EUROPEAN PATENT APPLICATION

(11) **EP 4 482 154 A1**
(43) Date of publication of application: **25.12.2024**
(21) Application number: 24178600.3
(22) Date of filing: 28.05.2024
(51) Int. Cl.: H04N 21/234, H04N 21/2343, H04N 21/258, H04N 21/262, H04N 21/44, H04N 21/45, H04N 21/658, H04N 21/81, H04N 21/845, H04N 21/858

(54) **DYNAMIC IN-SCENE SECONDARY CONTENT INSERTION**

(30) Priority: 20.06.2023 US 202318338097
(71) Applicant: NBCUniversal Media, LLC, New York, NY 10112 (US)
(72) Inventor: LYNN, Christopher, New York, 10112 (US); DIWAKER, Naman, New York, 10112 (US); GALLUCCIO, Robert, New York, 10112 (US); MANCHESTER, Eric, New York, 10112 (US); BERRIOS, Jesus Manuel, New York, 10112 (US); CLARK, Dan, New York, 10112 (US); RAMOS, Greg, New York, 10112 (US); BOYACA, Jaime, New York, 10112 (US); VENTURE, Vim, New York, 10112 (US); CARR, Fergal, New York, 10112 (US)
(74) Representative: Keltie LLP

(57) **Abstract**

Embodiments described herein relate to systems and methods for providing dynamic insertion of in-scene and non-in-scene secondary content. Secondary content insertion markers are encoded within the primary content, indicating that a particular type of secondary content (e.g., in-scene or non-in-scene) may be inserted at a time associated with the marker. When the insertion is in-scene, a portion of the primary content between two in-scene secondary content insertion markers may be replaced with alternative content that includes the portion of the primary content, supplemented with inserted secondary content.

## Description

### BACKGROUND

The present disclosure relates generally to techniques for dynamic in-scene secondary content insertion into streaming content. More specifically, the present disclosure relates to methods and systems for efficient creation, transcoding, and insertion of secondary content (e.g., advertisements or "ads") into scenes (e.g., a frame or collection of frames) of streamed primary content. In the current disclosure, to facilitate the discussion by providing a specific example, secondary content is sometimes referred to as an "ad" or "advertisement" and secondary content servers/services are sometimes referred to as "ad" or "advertisement" servers/services. The use of the term "ad" is not intended to limit the secondary content to traditional advertisements or secondary content servers and/or services to advertisement-based servers and/or services. Instead, the use of "ad" and/or "advertisement" in the current disclosure should be read as interchangeable with other types of secondary content, such as secondary interactive content, commentary, etc. to be presented in conjunction with primary content, such as streaming content requested by a consumer.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The number of content streaming platforms has increased drastically over the last several years. In many instances, a typical monetization strategy for these services has been providing secondary content (e.g., advertisements) at defined locations of the primary content, resulting in secondary content provision revenues. Unfortunately, however, there are limited locations where such secondary content may be provided and over-provision of secondary content may be undesirable to primary content consumers.

Increasingly, product placement within the primary content itself is being used as a monetization mechanism. However, product placement is typically static in nature, reducing an ability for dynamic changes over time, resulting in lost revenues. For example, physical product placement at the time of primary content creation is rigid, providing placement of static products defined at the time of the primary content creation. Post-production product placement has, to date, also been inflexible. At best, post-production product placement has inserted products via video editing techniques, without the ability to provide different versions of content (e.g., with different products) to different user bases in a dynamic manner. This inflexibility has also created missed opportunities for enhanced content playback and monetization. As such, a need exists to create more flexible in-scene content insertion that may dynamically provide different inserted content within scenes of played back primary content.

### BRIEF DESCRIPTION

The content transcoding and provision methods disclosed herein enable more flexible in-scene insertion of secondary content into primary content. Using the techniques provided herein, secondary content may be selected and inserted using non-in-scene secondary content insertion systems, thus improving technological efficiencies by reducing a number of dedicated systems needed for insertion of secondary content. Indeed, the current techniques may greatly reduce software development and sustaining costs by providing in-scene secondary content insertion via the same systems and in a generally similar manner as non-in-scene secondary content insertion.

To enable in-scene content insertion, new alternative content opportunity (ACO) markers are inserted into primary content indicative of portions of primary content where alternative content that includes the secondary content may be inserted. The alternative content or replacement portions of the primary content are generated from the primary content and include the secondary content. Upon subsequent playback of the primary content, as the ACO markers are observed, a request for alternative content is requested. In response, secondary content selection services provide an indication of particular alternative content to provide in the playback. The playback is altered to include the alternative content, resulting in the secondary content placement within scenes of the primary content.

In accordance with an aspect of the present disclosure, a tangible, non-transitory, computer-readable medium comprises computer-readable instructions that, when executed by one or more processors, of one or more computers, cause the one or more computers to receive primary content, receive in-scene content insertion timings indicative of when alternative content is available in a timeline of the primary content, and cause encoding of the primary content with alternative content opportunity markers indicating the in-scene content insertion timings.

In some embodiments of this aspect, the alternative content opportunity markers comprise a start time and an end time where alternative content comprising in-scene inserted secondary content may replace a portion of the primary content.

In further embodiments of this aspect, the tangible, non-transitory, computer-readable medium further comprises computer-readable instructions that, when executed by the one or more processors of the one or more computers, cause the one or more computers to identify one or more non-in-scene content insertion timings within the timeline of the primary content and cause the encoding of the primary content with a non-in-scene insertion marker different than the alternative content opportunity markers, the non-in-scene insertion marker indicating a time when non-in-scene secondary content may be inserted into the timeline of the primary content. In such embodiments, the alternative content opportunity markers may comprise first Society of Cable Telecommunications Engineers (SCTE) markers comprising metadata indicating that the alternative content opportunity markers are alternative content opportunity markers, and the non-in-scene insertion marker may comprise a second SCTE marker different than the first SCTE markers, comprising metadata indicating that the non-in-scene insertion marker is a non-scene insertion marker.

In some embodiments of this aspect, the tangible, non-transitory, computer-readable medium further comprises computer-readable instructions that, when executed by the one or more processors of the one or more computers, cause the one or more computers to receive the in-scene content insertion timings from a secondary content creation service that creates alternative content that may replace a portion of the primary content that is within the alternative content opportunity markers.

In further embodiments of this aspect, the tangible, non-transitory, computer-readable medium further comprises computer-readable instructions that, when executed by the one or more processors of the one or more computers, cause the one or more computers to generate instant-video-ingest (IVI) metadata based upon received in-scene content insertion timings, the IVI metadata providing a sequence of secondary content insertion areas within a timeline of the primary content, and provide the IVI metadata to a secondary content decisioning service, enabling the secondary content decisioning service to select secondary content to insert in the secondary content insertion areas during a subsequent playback of the primary content.

In some embodiments of this aspect, the alternative content opportunity markers, when identified during subsequent playback of the primary content, cause an alternative content clip to be selected for playback with the primary content, and an indication of segments of the alternative content clip to be stitched into a playback manifest of a subsequent playback at a location in the playback manifest that is indicated by the alternative content opportunity markers. In such embodiments, the segments of the alternative content clip may comprise video segments and not audio segments or subtitle segments.

In further embodiments of this aspect, the tangible, non-transitory, computer-readable medium further comprises computer-readable instructions that, when executed by the one or more processors of the one or more computers, cause the one or more computers to perform a frame-by-frame analysis to identify candidate portions of the primary content for insertion of alternative content, and provide the primary content and the candidate portions of the primary content to a secondary content creation service to cause generation of the alternative content. In such embodiments, the tangible, non-transitory, computer-readable medium may further comprise computer-readable instructions that, when executed by the one or more processors of the one or more computers, cause the one or more computers to receive the alternative content from the secondary content creation service, and cause transcoding of the alternative content into one or more formats compatible with playback of the primary content.

In some embodiments of this aspect, the tangible, non-transitory, computer-readable medium further comprises computer-readable instructions that, when executed by the one or more processors of the one or more computers, cause the one or more computers to receive a request for playback of the primary content from a content player, identify from the encoded primary content, the alternative content opportunity markers indicating a location where secondary content may be inserted, determining whether the alternative content opportunity markers indicate an in-scene secondary content insertion location or a non-in-scene secondary content insertion location, and in response to determining that the one or more markers indicate an in-scene secondary content insertion location, in a playback manifest, split a timeline at pod definition points indicated by the one or more markers, remove primary content segments between the pod definition points, and insert alternative content segments comprising scenes of the removed primary content segments modified with in-scene inserted secondary content between the pod definition points, and provide the playback manifest to the content player for playback after the alternative content segments are inserted. In such embodiments, the tangible, non-transitory, computer-readable medium may further comprise computer-readable instructions that, when executed by the one or more processors of the one or more computers, cause the one or more computers to in response to determining that the alternative content opportunity markers indicate a non-in-scene secondary content insertion location, in the playback manifest, split the timeline at the alternative content opportunity markers, extend a portion of the timeline by a length of the secondary content, and insert, in the extended portion of the timeline, segments of the secondary content. In these additional optional embodiments, the timeline that is split may comprises a video timeline, and an audio timeline when the alternative content opportunity markers indicate a non-in-scene secondary content insertion location, wherein the timeline that is split comprises a video timeline without an audio timeline when the alternative content opportunity markers indicate an in-scene secondary content insertion location.

In yet further embodiments of this aspect, the tangible, non-transitory, computer-readable medium further comprises computer-readable instructions that, when executed by the one or more processors of the one or more computers, cause the one or more computers to receive a request for playback of the primary content from a content player, identify from the encoded primary content, the alternative content opportunity markers indicating a location where secondary content may be inserted, determining whether the alternative content opportunity markers indicate an in-scene secondary content insertion location or a non-in-scene secondary content insertion location, and in response to determining that the one or more markers indicate an in-scene secondary content insertion location, in a playback manifest, split a timeline at pod definition points indicated by the one or more markers, remove primary content segments between the pod definition points, and insert alternative content segments comprising scenes of the removed primary content segments modified with in-scene inserted secondary content between the pod definition points, and provide the playback manifest to the content player for playback after the alternative content segments are inserted, and wherein the request for playback of the primary content from the content player comprises targeting data, and wherein the tangible, non-transitory, computer-readable medium further comprises computer-readable instructions that, when executed by the one or more computers, cause the one or more computers to select the alternative content segments based on the targeting data.

In accordance with a second aspect of the present disclosure, a method includes receiving an indication of primary content to playback, providing a request for playback of the primary content, in response to providing the request for playback, receiving a stitched manifest, the stitched manifest comprising an indication of segments of alternative content that replace a subset of segments of the primary content, wherein the alternative content comprises secondary content inserted into scenes of the subset of segments of the primary content, and in response to receiving the stitched manifest, request and playback the primary content with the alternative content replacing the subset of segments of the primary content. It is to be appreciated that where applicable, this aspect of the invention may be combined with any of the modifications described above with respect to the first aspect of the invention.

In some embodiments of this aspect, the method further comprises receiving, via the stitched manifest, an indication that the segments of alternative content are alternative content, and performing an alternative content player action based upon the indication that the segments of alternative content are alternative content. In such embodiments, the alternative content player action may comprise identifying the segments of alternative content as a secondary content insertion, and refraining from providing an inserted secondary content countdown clock that is provided during non-in-scene secondary content insertion into the primary content, or disabling playback controls that are disabled during non-in-scene secondary content insertion into the primary content, or both.

In further embodiments of this aspect, the method further comprises reporting an impression in response to playback of the alternative content.

In yet further embodiments of this aspect, the request for playback of the primary content is provided to a playback customization service, causing selection of the alternative content by a secondary content decisioning service.

In some embodiments of this aspect, the method further comprises providing with the request for playback of the primary content, targeting data configured to aid in selection of the alternative content. In such embodiments, the method may further comprise receiving a second indication of a second primary content to playback, providing a second request for playback of the primary content with second targeting data configured to aid in selection of second alternative content different than the alternative content, in response to providing the request for playback, receiving a second stitched manifest, the second stitched manifest comprising an indication of segments of the second alternative content that replace the subset of segments of the primary content, wherein the second alternative content comprises second secondary content inserted into the scenes of the subset of segments of the primary content, and in response receiving the second stitched manifest, request and playback the primary content with the second alternative content replacing the subset of segments of the primary content.

In accordance with a third aspect of the present disclosure, a tangible, non-transitory, computer-readable medium comprises computer-readable instructions that, when executed by one or more processors, of one or more computers, cause the one or more computers to identify from encoded primary content, one or more markers indicating a location where secondary content may be inserted, determine whether the one or more markers indicate an in-scene secondary content insertion location or a non-in-scene secondary content insertion location, and in response to determining that the one or more markers indicate an in-scene secondary content insertion location, in a playback manifest, split a timeline at pod definition points indicated by the one or more markers, remove primary content segments between the pod definition points, and insert alternative content segments comprising scenes of the removed primary content segments modified with in-scene inserted secondary content between the pod definition points. The instructions, when executed by the one or more processors further cause the one or more computers to provide the playback manifest to a content player for playback after the alternative content segments are inserted. It is to be appreciated that where applicable, this aspect of the invention may be combined with any of the modifications described above with respect to the first and second aspects of the invention.

In some embodiments of this aspect, the tangible, non-transitory, computer-readable medium further comprises computer-readable instructions that, when executed by the one or more processors of the one or more computers, cause the one or more computers to, in response to determining that the one or more markers indicate a non-in-scene secondary content insertion location, in the playback manifest, split the timeline at the one or more markers, extend a portion of the timeline by a length of the secondary content, and insert, in the extended portion of the timeline, segments of the secondary content. In such embodiments, the timeline that is split may comprise a video timeline, and an audio timeline when the one or more markers indicate a non-in-scene secondary content insertion location; wherein the timeline that is split comprises a video timeline without an audio timeline when the one or more markers indicate an in-scene secondary content insertion location.

In accordance with a fourth aspect of the present disclosure, a method comprises receiving a first request for in-scene secondary content, wherein the in-scene secondary content comprises a modification of one or more scenes of primary content, receiving first targeting data configured to aid in selection of the in-scene secondary content for the first request, based at least in part on the first targeting data, selecting a first subset of clips of in-scene secondary content, and providing an indication of the selected first subset of clips as a response to the first request. It is to be appreciated that where applicable, this aspect of the invention may be combined with any of the modifications described above with respect to the previous aspects of the invention.

In some embodiments of this aspect, the method further comprises receiving a second request for in-scene secondary content, receiving second targeting data, different than the first targeting data, configured to aid in selection of the ins-scene secondary content for the second request, based at least in part on the second targeting data, selecting a second subset of clips of in-scene content different than the first subset of clips of in-scene content, and provide an indication of the selected second subset of clips as a response to the second request.

In accordance with a fifth aspect of the present disclosure, a computer-implemented method comprises receiving primary content, receiving in-scene content insertion timings indicative of when alternative content is available in a timeline of the primary content, and causing encoding of the primary content with alternative content opportunity markers indicating the in-scene content insertion timings.

### DRAWINGS

These and other features, aspects, and advantages of the present disclosure will become better understood when the following detailed description is read with reference to the accompanying drawings in which like characters represent like parts throughout the drawings.
FIG. 1 is a schematic diagram, illustrating a system that facilitates dynamic in-scene secondary content insertion, in accordance with certain embodiments.
FIG. 2 is a more-detailed schematic diagram, illustrating a system for generating alternative content from the primary content that includes the secondary content, in accordance with certain embodiments;
FIG. 3 is a flowchart, illustrating a process for creating alternative content, in accordance with certain embodiments;
FIG. 4 is a flowchart, illustrating a process for identifying compatible secondary content for the alternative content, in accordance with certain embodiments;
FIG. 5 is a schematic diagram, illustrating a system for playback of the primary content with alternative content, in accordance with certain embodiments;
FIG. 6 is a flowchart, illustrating a process for playback of primary content with alternative content, in accordance with certain embodiments;
FIG. 7 is a schematic diagram illustrating primary content with ACO markers and mid-roll markers, in accordance with certain embodiments;
FIG. 8. is a flowchart, illustrating a process for inserting secondary content into primary content, in accordance with certain embodiments;
FIG. 9. is a schematic diagram, illustrating insertion of mid-roll content into a primary content stream, in accordance with certain embodiments;
FIG. 10. is a schematic diagram, illustrating in-scene replacement of primary video with alternative video, in accordance with certain embodiments; and
FIG. 11 is a schematic diagram, illustrating an example of dynamic secondary content insertion, in accordance with certain embodiments.

### DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but may nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

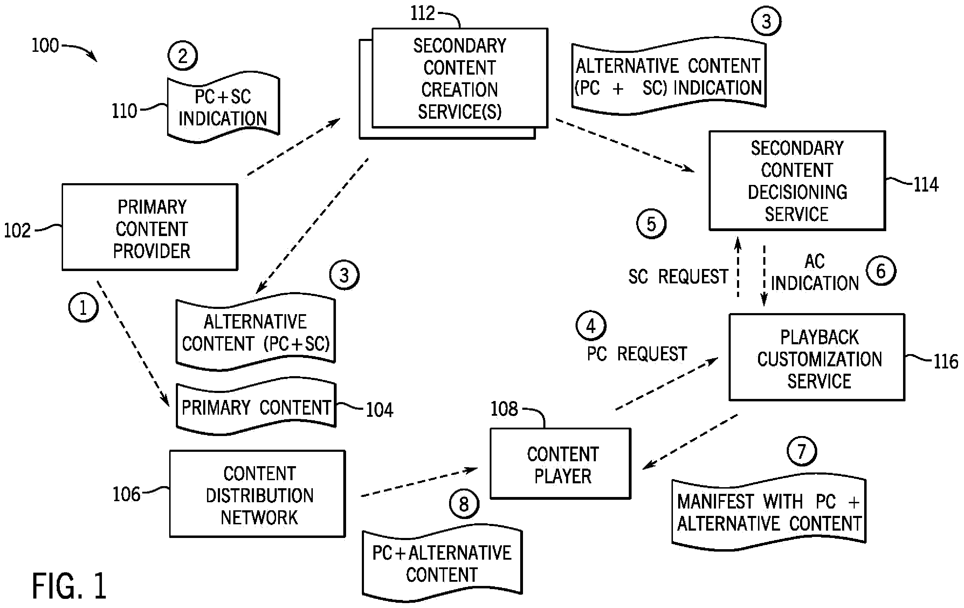

FIG. 1 is a schematic diagram, illustrating a system 100 that facilitates dynamic in-scene secondary content insertion, in accordance with certain embodiments. The system 100 includes a primary content provider 102 that provides primary content 104 for consumption (e.g., by provision to a content player 108 via a content delivery network (CDN 106), as indicated by sequence node 1).

It may be desirable to provider in-scene secondary content with the primary content 104. For example, secondary content might include in-scene products or advertisements that may be monetizable by the primary content provider 102. To incorporate in-scene secondary content, as indicated by sequence node 2, the primary content provider 102 may provide a package 110 including the primary content and a secondary content indication to a secondary content creation service 112, requesting that alternative content be generated. The secondary content indication may include an indication of particular products and other objects to insert as secondary content into the primary content and may provide candidate times and/or locations within the primary content where secondary content may be inserted. In some embodiments, the secondary content creation service 112 may derive the candidate times and/or locations, and in other embodiments a coordinated effort between the primary content provider 102 and the secondary content creation service 112 may identify the candidate times and/or locations.

In response to receiving the request to generate alternative content, the secondary content creation service 112 may generate the alternative content and provide the alternative content to the CDN 106 for distribution and at least an indication of the alternative content to a secondary content decisioning service 114, as indicated by sequence nodes 3. The secondary content decision service 114 is tasked with identifying particular alternative content to include with primary content 104 during subsequent playback via the content player 108.

A user may request primary content (e.g., via a graphical user interface (GLTI) associated with a content player 108). This results in the content player 108 requesting the specified primary content from a playback customization service 116, as indicated by sequence node 4. The playback customization service 116 may provide a request for secondary content to the secondary content decisioning service 114, as illustrated by sequence node 5.

Based upon one or more factors, the secondary content decisioning service 114 may select one or more pieces of alternative content to replace portions of the primary content. For example, when the secondary content is an advertisement, a particular number of impressions of the advertisement may be promised via a monetization scheme of the secondary content. The promised impression compared with the actual impressions provided may indicate a prioritization of selecting a particular advertisement (and its associated alternative content) for playback. Further, advertisements may be targeted to particular demographics. Thus, demographics of a user of the content player 108 may factor into a selection of particular secondary content (and associated alternative content) to provide.

In response to selection of particular secondary content (and associated alternative content) for a particular playback session, the secondary content decisioning service 114 may provide an indication of the selected alternative content to the playback customization service 116, as illustrated by sequence node 6. The playback customization service 116 may alter a manifest of the primary content 104, replacing the candidate portions to be replaced with the selected alternative content. As indicated by sequence node 7, the manipulated manifest may be provided to the content player108, which results in receiving a content stream with the primary content and with the selected alternative content replacing portions of the primary content. In this manner, dynamic in-scene secondary content insertion may be provided, where particular in-scene content to insert is decided during the playback session and may be dynamically adjusted from playback session to playback session. This is a significant improvement that provides increased content streaming capabilities that will lead to new opportunities in streaming content provision.

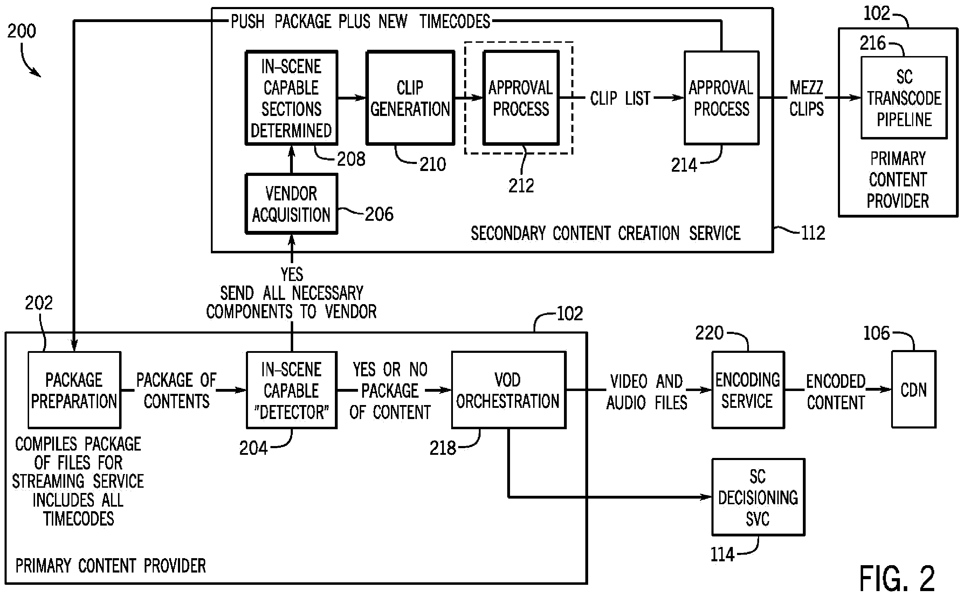

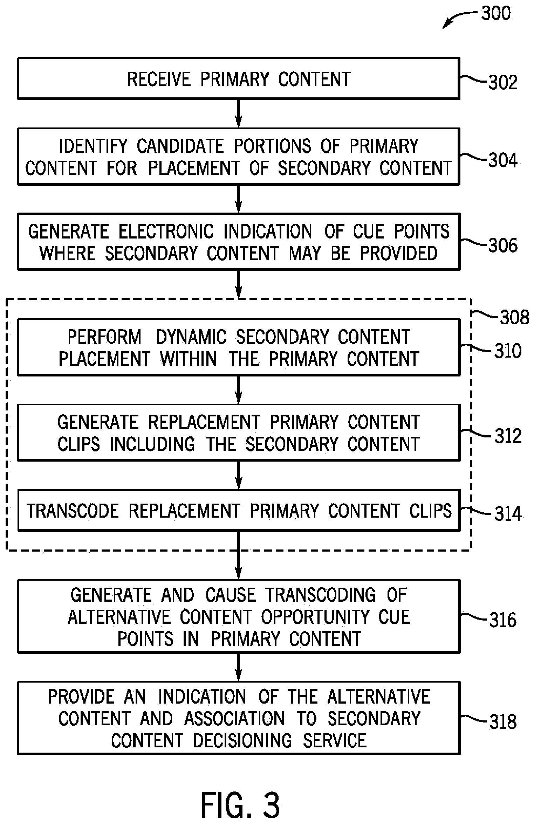

Turning now to a more detailed discussion of alternative content creation, FIG. 2 is a more-detailed schematic diagram, illustrating a system 200 for generating alternative content from the primary content that includes the secondary content, in accordance with certain embodiments. FIG. 3 is a flowchart, illustrating a process 300 for creating alternative content, in accordance with certain embodiments. For simplicity, these figures will be discussed together.

The process 300 begins with receiving primary content (block 302). As illustrated in FIG. 2, the primary content provider 102 may perform package preparation, which may include receiving primary content and preparing the primary content for ingestion by a secondary content creation service 112 to have secondary content added to or layered with the primary content. In some embodiments, package preparation 202 may include bundling primary content files with timecodes into a package and providing to an in-scene capable detector system 204.

The process 300 also includes identifying candidate portions of the primary content for placement of secondary content (block 304). As illustrated in FIG. 2, the in-scene capable detector system 204 may identify portions of the primary content that are candidates for in-scene secondary content insertion. To do this, the in-scene capable detector system 204 may perform a frame-by-frame analysis to identify candidate frames that meet certain criteria set by secondary content insertion rules. For example, the frame-by-frame analysis may identify scenes that meet a scene timing threshold (e.g., a threshold minimum number of frames and/or threshold amount of time that frames present a consistent scene), when the rules indicate such threshold requirement. After identifying candidate frames, candidate portions of the frames may also be identified. For example, the in-scene capable detector system 204 may identify (e.g., via object recognition algorithms), particular objects within the candidate frames that may be replaced with secondary content. For example, the in-scene capable detector system 204 may identify two dimensional objects, such as posters, pictures, etc. and/or three-dimensional objects, such as bottles, cups, etc. In an aspect, candidate portions of the frames may be identified based on the absence of objects for a particular duration of frames (e.g., a blank wall, empty desk, empty chair, etc.). In this aspect, the in-scene capable detector system 204 may identify available spaces as areas that may be layered with secondary content. As indicated in FIG. 3, the process 300 includes generating an electronic indication of where secondary content may be provided (block 306). For example, the in-scene capable detector system 204 may compile a list of candidate frames, objects, and/or available spaces. In some embodiments, the compiled list is provided to particular teams within the primary content provider 102, where the compiled list may be electronically edited and/or approved.

Next, an alternative content generation process 308 may be performed. The compiled list may be provided to one or more secondary content creation services 112 for insertion of secondary content into the primary content. The in-scene capable detector system 204 may automatically select a particular one of the secondary content creation services 112 for assignment of particular portions of the compiled list based upon certain secondary content creation service criteria. For example, in one embodiment, the compiled list may be separated based upon candidate object types, such as based upon 2D vs 3D objects. In this manner, secondary content creation services 112 specifically known to provide better work with a particular type of candidate object may be selected for insertion of secondary content for that object.

The assigned portions of the compiled list are provided for vendor acquisition 206 by the assigned secondary content creation service 112. The vendor acquisition 206 may include receiving the package of content and the assigned portion of the compiled list. The secondary content creation service 112 may determine actual in-scene capable sections to insert secondary content into (block 208) and perform dynamic secondary content placement within the acquired primary content (block 310). The secondary content creation service 112 may generate replacement portions of the primary content that include the in-scene secondary content inserted into the primary content (blocks 210 and 312). The secondary content creation service 112 and/or the primary content provider 102 may include an approval process 212. The approval process 212 may include providing a clip completion indication via a graphical user interface accessible by the primary content provider 102 and/or the secondary content creation service 112. The GUI may include links to view the completed clips and provide an approval indication affordance that selectively enables users to approve and/or decline clips generated by the secondary content creation service 112.

Upon approval of the generated clips, approved clips 214 may be provided to the primary content provider 102. More specifically, mezzanine copies of the approved clips 214 are provided to a secondary content transcode pipeline 216. The secondary content transcode pipeline may dynamically generate transcoded versions of alternative content (e.g., the approved clips 214) enabling a particular transcoded version of the approved clips 214 to be inserted in accordance with the primary content provider's secondary content insertion process (block 314).

The process 300 continues by causing generation and transcoding of alternative content Opportunity Cue Points/Markers within the primary content (block 316). In certain embodiments, in response to approval of the approved clips 214, a metadata update is provided to the primary content provider 102. The metadata update includes timing information indicating where (e.g., in the primary content timing) the secondary content creation service 112 actually generated alternative content (e.g., approved clips 214) for the primary content. This package preparation process 202 then updates the primary content by providing alternative content opportunity (ACO) timings in the package based upon the received timings in the metadata, resulting in an updated package that may optionally flow through a second round of detection by the in-scene capable detector system 204 and eventually is provided to a video on demand (VOD) orchestration process 218. The VOD orchestration process 218 causes encoding of the primary content by providing the primary content and ACO timings to an encoding service 220. The encoding service 220 may insert ACO markers into an encoded version of the primary content (e.g., in the form of Society of Cable Telecommunications Engineers (SCTE) markers, such as SCTE 35 markers). These ACO markers may provide an indication of where alternative content opportunities exist when the primary content is subsequently played back. The encoded primary content may be provided to a content delivery network (CDN) 106 for subsequent distribution to players upon playback request.

Additionally, the process 300 includes providing an indication of the alternative content (e.g., instant-video-ingest (IVI) information) to the Secondary Content Decisioning Service 114, enabling the Secondary Content Decisioning Service 114 to become aware of slots created for secondary content insertion along with an indication of available secondary content/alternative content for the slots to assist in targeting specific secondary content to insert. This indication enables subsequent selection of alternative content for insertion into a primary content playback upon subsequent request. To do this, the VOD orchestration process 218 may provide an indication of slots and/or timings and associated approved clips 214 that may replace the primary content during the timings to the secondary content decisioning service 114. This may result in the secondary content decisioning service 114 being informed of the approved clips 214 and when they may be scheduled during playback. A mockup of such a possible indication is provided below:

```
 <cuePoints configuration='CLEAN'>
  <cuePoint>
     <contentTimePosition>500</contentTimePosition>
     <timeToNextAdUnit>1</timeToNextAdUnit>
     <timePositionClass>MIDROLL</timePositionClass>
     <customSlotId>midroll_881</customSlotId>
     <sequence>1</sequence>
  </cuePoint>
  <cuePoint>
     <contentTimePosition> 1000</contentTimePosition>
     <timePositionClass>OVERLAY</timePositionClass>
     <adUnit>Provider_InScene_Overlay_1</adUnit>
     <customSlotId>Provider_In-Scene_Overlay_1</customSlotId>
     <sequence>2</sequence>
  </cuePoint>
  <cuePoint>
     <contentTimePosition>2000</contentTimePosition>
     <timePositionClass>OVERLAY</timePositionClass>
     <adUnit>Provider _InScene_Overlay _2</adUnit>
     <customSlotId>Provider_In-Scene_Overlay _2</customSlotId>
     <sequence>3</sequence>
  </cuePoint>
  </cuePoints>
```

IVI information may include frame rate, video quality, descriptive metadata and mid-roll Cue Points, etc.. The updated IVI information may indicate that the content supports in-scene secondary content, contains mid-roll CuePoints, and in-scene CuePoints that indicate the start and end time of alternative content opportunities that include one or more in-scene secondary content (or overlays) that are to be inserted for the content. Each in-scene Cue Point is updated to include frame accurate start & end time information along with a unique CustomSlotId for the primary content. Providing the Secondary Content Decisioning Service 114 with information on the entire set of in-scene secondary content enables it to maintain consistency across related in-scene secondary content. For example, if a poster is inserted into a scene, but the camera angle changes such that the poster is no longer in view, when the camera angle returns to the original point of view, the Secondary Content Decisioning Service 114 may need to know that for some subsequent number of in-scene secondary content insertions, the same poster should be inserted. The Secondary Content Decisioning Service 114 may know this because when an indication of the in-scene secondary content (e.g., the alternative content clips) are provided to Secondary Content Decisioning Service 114, there will be an indication that a set of alternative content clips are related, such that if the Secondary Content Decisioning Service 114 selected one alternative content clip in the set, it selects and uses the others. Based on the updated IVI information, the Secondary Content Decisioning Service 114 then knows which alternative content clips to insert within particular Alternative Content Opportunity markers.

As illustrated, the indication may include a slotting sequence for markers/cue points that indicate details of the type of secondary content that may be inserted at the marker/cue point. For example, a midroll insertion is indicated, followed by two "overlay" insertions, representative of in-scene insertions in the sequence of markers/cue points.

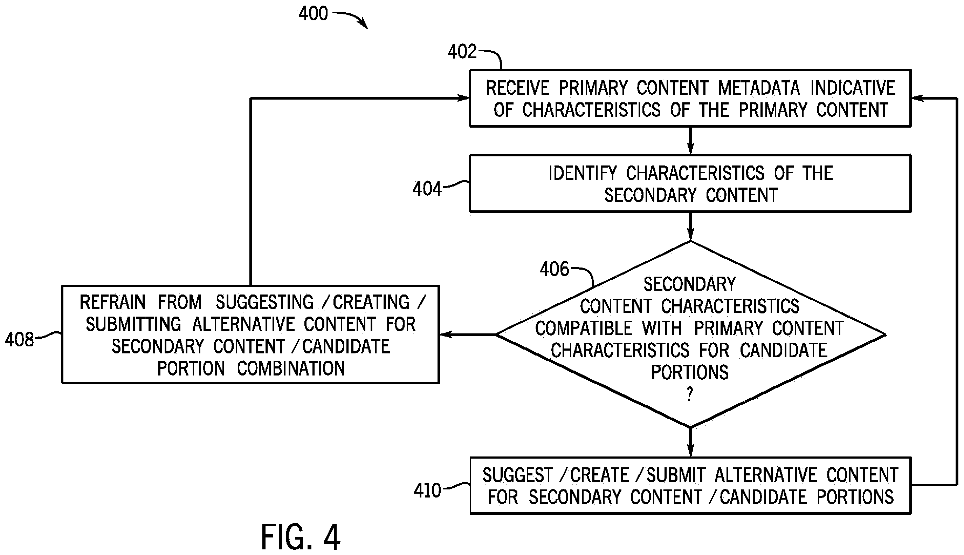

Not all portions of the primary content are suitable for in-scene secondary content insertion. Further, even when portions of the primary content are suitable for in-scene secondary content insertion, not all secondary content may be suitable for in-scene insertion into particular candidate portions of the primary content. FIG. 4 is a flowchart, illustrating a process 400 for identifying compatible secondary content for the alternative content, in accordance with certain embodiments. The process 400 begins by receiving primary content metadata indicative of characteristics of the primary content (block 402). For example, pertinent characteristics may include pre-roll cue points, mid-roll cue points, post-roll cue points, metadata describing and/or identifying a scene of the primary content, dialog (e.g., closed captioning and/or a script) associated with candidate scenes for in-scene secondary content insertion, etc.

Characteristics of candidate secondary content to potentially be inserted in-scene are identified (block 404). For example, a subject matter of the secondary content (e.g., type of product to be inserted), a target demographic associated with the content, etc. may be identified.

A determination is made as to whether the secondary content characteristics are compatible with the primary content characteristics (decision block 406). Machine learning and automatic electronic frame analysis may be used to identify compatibility/incompatibility.

In some embodiments, the compatibility determination may be based upon subject matter. For example, from a creative aspect, the subject matter of the secondary content and the primary content should have subject matter compatibility. Thus, secondary content representative of alcohol may not be compatible with primary content depicting an alcoholics anonymous scene, whereas secondary content representative of a water bottle, for example, may be. In an aspect, a determination of subject matter appropriateness may be performed by the secondary content creation service 112.

In certain embodiments, the compatibility may be based upon in-scene consistency. For example, certain candidate portions may be panned away from and returned to. In such cases, the secondary content inserted in the initial candidate position should remain consistent when returned to. Thus, differing secondary content for subsequent return candidate positions having a common scene may be incompatible with the candidate positions of the primary content.

In some embodiments, other rule-based constrains may dictate compatibility. In such embodiments, certain candidate portions of the primary content themselves may be found to be incompatible for any in-scene insertion of secondary content. For example, a pre-defined rule may indicate that no in-scene insertion should occur within a threshold distance (e.g., in frames and/or time) to a pre-roll, mid-roll, and/or post-roll cue point. Under such embodiments, all secondary content may be incompatible with a candidate portion within such a threshold, causing these candidate portions to be withdrawn as a candidate for in-scene secondary content insertion.

If a candidate portion of the primary content is found to be incompatible with the pre-defined rules and/or a secondary content and candidate portion of primary content combination is found to be incompatible, the system may refrain from suggesting, creating, and/or submitting alternative content for the candidate portion of primary content and/or the secondary content and candidate portion of primary content combination (block 408). However, when a secondary content and candidate portion of primary content are compatible, the system may suggest, create, and/or submit alternative content (e.g., replacement clips) for the secondary content and candidate portion of primary content combination (block 410).

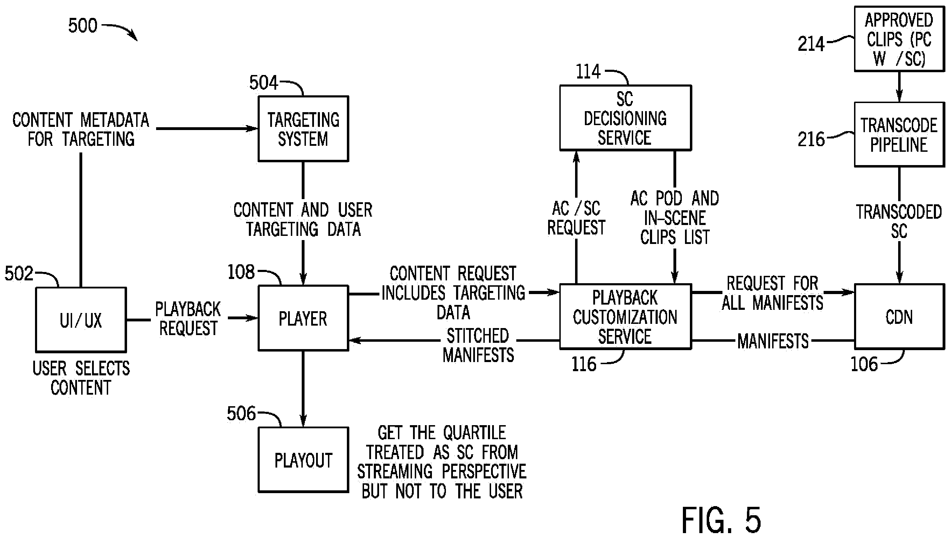

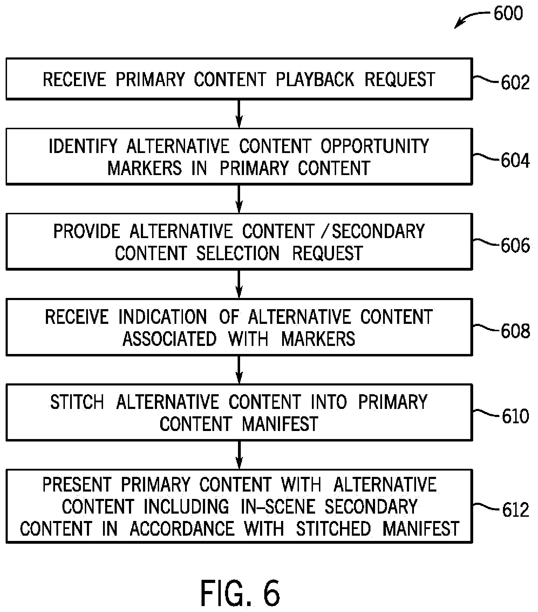

Having discussed generation of the alternative content with in-scene secondary content insertion, the discussion now turns to dynamic selection and playback of alternative content. FIG. 5 is a schematic diagram, illustrating a system 500 for playback of the primary content with alternative content, in accordance with certain embodiments. FIG. 6 is a flowchart, illustrating a process 600 for playback of primary content with alternative content, in accordance with certain embodiments. For simplicity, these figures will be discussed together.

The process 600 begins with receiving a primary content playback request (block 602). As illustrated in the system 500 of FIG. 5, a graphical user interface (GLTI) 502 may provide primary content offerings to a user. The user may select desired primary content, resulting in the playback request being generated and received by the content player 108. Additionally, as illustrated in FIG. 5, content metadata and/or user metadata may be provided to a targeting system 504, which may accumulate and provide content user targeting data to the content player 108. The content and user targeting data may include data pertinent to selection of secondary content for playback (e.g., both in-scene and at primary content breaks) with the primary content.

As mentioned above, Alternative Content Opportunity (ACO) markers are encoded in the primary content. The process 600 includes identifying the ACO markers, to identify when alternative content should be requested and/or inserted during playback (block 604).

In response to identifying ACO markers, a request for alternative content selection is provided (block 606). For example, as illustrated in FIG. 5, the content player 108 may provide the alternative content request with the targeting data from the targeting system 504 to the playback customization service 116, which forwards the request to the secondary content decisioning service 114 tasked with selecting alternative content/secondary content for inserting in the playback stream.

In response to the alternative content selection request, an indication of selected alternative content clips and associated ACO markers to insert the selected alternative content clips into may be received (block 608). For example, as illustrated in FIG. 5, selected alternative content clips and associated alternative content pods (e.g., start and end ACO markers) indicative of where to insert the selected alternative content clips may be provided to the playback customization service 116.

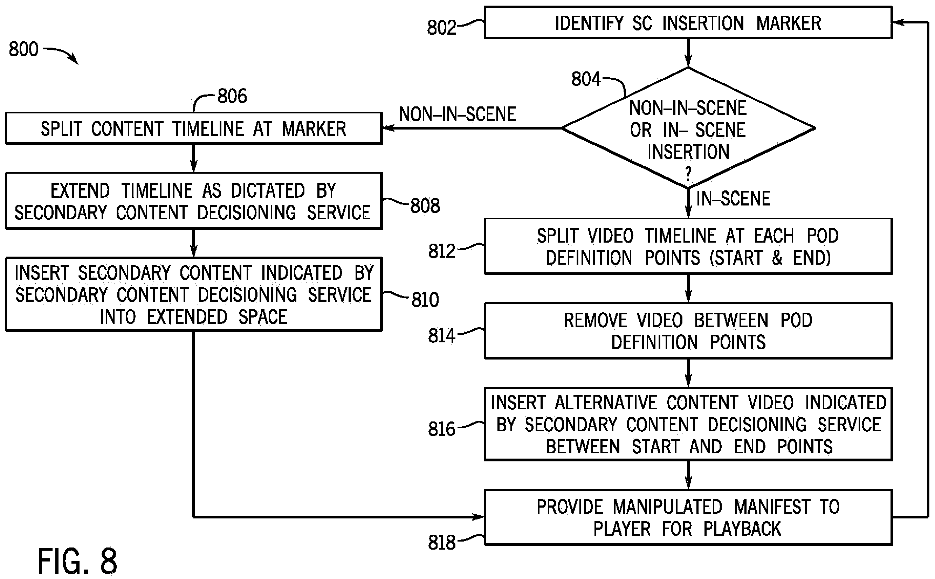

As mentioned above, transcoded versions of the alternative content (e.g., the approved clips 214) are submitted to the CDN 106 via a secondary content transcode pipeline 216. In response to receiving selected alternative content to insert into the playback stream from the secondary content decisioning service 114, the process 600 continues by stitching the alternative content into the primary content manifest (block 610). For example, as illustrated in FIG. 5, the playback customization service 116 may request all manifests associated with the primary content and the selected alternative content from the content delivery network 106 storing the primary content and alternative content. The playback customization service may replace portions of the primary content manifest with the alternative content manifest at the alternative content pods specified by the secondary content decisioning service 114. The stitching process is described in more detail below with regard to FIGS. 8-10.

The stitched manifest is presented, causing the primary content to be presented with the alternative content that includes the in-scene secondary content (block 612). For example, as illustrated in FIG. 5, the stitched manifest describing the primary content segments and alternative content segments at the alternative content pods is returned from the playback customization service 116 to the content player 108. The content player 108 then performs playout 506. The stitched manifest may include an indication of the particular portions of the manifest that include alternative content. In this manner, content player 108 may perform particular activities specific to alternative content playback. For example, when the secondary content included in the alternative content includes an advertisement, it may be desirable to retain an impression log indicative of when the alternative content is played back (e.g., in order to monetize the advertisement). Thus, upon encountering an alternative content portion of the manifest during a playout 506 session, an impression of in-scene secondary content may be recorded/reported by the content player 108. Further, it may be desirable to distinguish alternative content having in-scene secondary content insertion from other secondary content. For example, returning to an advertising example, the content player 108 may cause certain player controls (e.g., fast forward, skip) to disable during a pre-roll, post-roll, and/or mid-roll advertisement insertion. However, due to the nature of in-scene secondary content, which is in the actual scenes of primary content rather than in a scene break of the primary content, it may be desirable for the content player 108 to behave differently (e.g., not disable player controls such as fast forward, rewind, or skip). Thus, the ACO markers may be distinguished from other secondary content insertion markers (e.g., using different labels, marker types, etc.). In another example, a secondary content insertion countdown clock indicating when a non-in-scene secondary content will end playback may be refrained from view during the playback of in-scene secondary content insertion via alternative content replacement based upon this distinction.

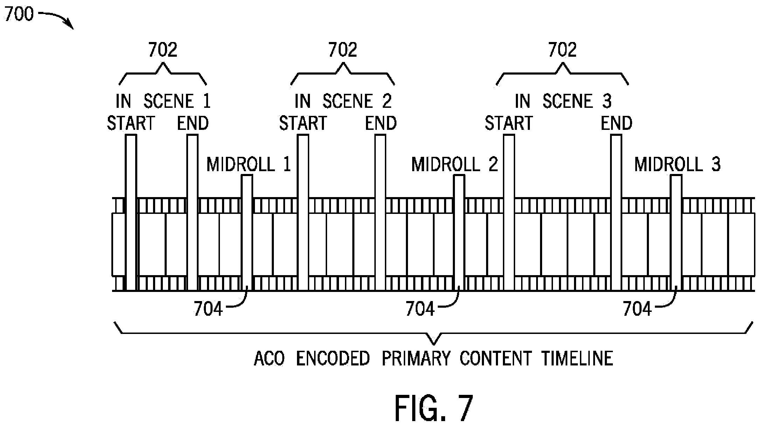

FIG. 7 is a schematic diagram illustrating an example primary content timeline 700 with distinguished ACO markers 702 and mid-roll markers 704, in accordance with certain embodiments. As illustrated, in FIG. 7, the alternative content pods may be defined by start and end markers, as an indication of the entire portion being replaced by the alternative content may be needed for the stitching. In other embodiments, a starting marker may be accompanied by an offset value (e.g., timing and/or number of frames from the starting marker) indicating the entirety of the primary content making up the alternative content pod. In contrast, the depicted mid-roll markers 704 merely include one marker, indicating a break in playback until the mid-roll secondary content playback finishes.

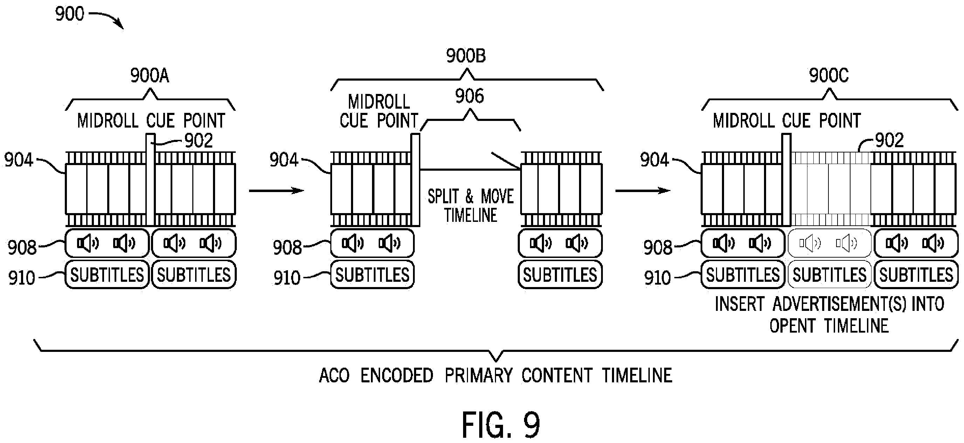

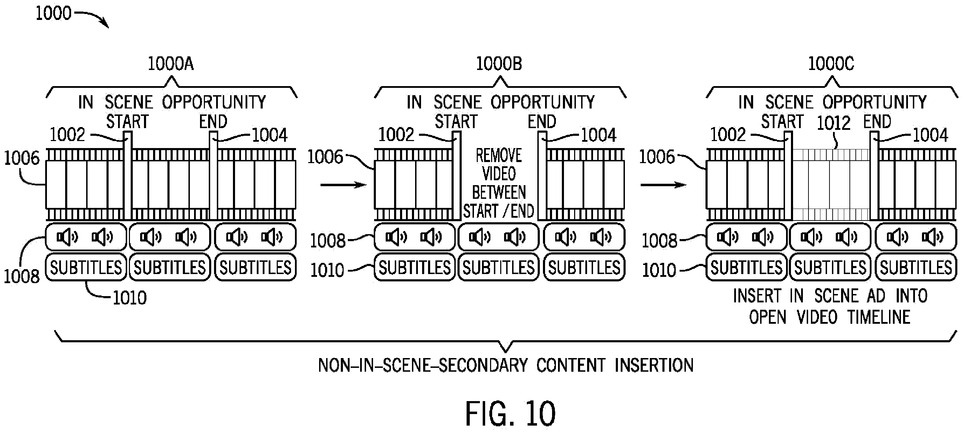

Turning to a more-detailed discussion of the contrast between these types of secondary content insert, FIG. 8. is a flowchart, illustrating a process 800 for inserting secondary content into primary content, in accordance with certain embodiments. FIG. 9 is a schematic diagram, illustrating insertion 900 of mid-roll content into a primary content stream, in accordance with certain embodiments. FIG. 10 is a schematic diagram, illustrating in-scene replacement 1000 of primary video with alternative video, in accordance with certain embodiments. For simplicity, these figures will be discussed together.

The process 800 begins by identifying a secondary content insertion marker within the primary content timeline (block 802). For example, as illustrated in FIG. 9, in progression 900A, a mid-roll marker 902 is observed in the primary content video timeline 904.

A determination is made as to whether the marker indicates a non-in-scene secondary content insertion (e.g., pre-roll, mid-roll, post-roll) or an in-scene insertion of secondary content (decision block 804). As mentioned above, SCTE markers and associated metadata may identify a particular type of secondary content insertion. Thus, this determination may be based upon the type of marker and/or the marker metadata.

When the marker indicates a non-in-scene insertion, the primary content timeline (e.g., audio and video) is split at the marker (block 806). The primary content timeline is extended at the primary content timeline split to match the length of the secondary content to be inserted (block 808). For example, in progression 900B, a split 906 occurs in audio timeline 908 and corresponding subtitle timeline 910 as well as the primary content video timeline 904 at the mid-roll marker 902. The split causes the second portion of the primary content to move a distance that equals the length of the secondary content.

The secondary content is then inserted in the extended portion of the primary content timeline (e.g., within the primary content playback manifest) (block 810). For example, in progression 900C of FIG. 9, secondary content 912 (e.g., including video, audio, and subtitles) is inserted into the extended portion of the timelines created in progression 900B.

Returning to decision block 804 of FIG. 8, when the insertion is an in-scene insertion, the video timeline is split at each of the alternative content pod definition points (e.g., the starting point and the ending point) (block 812). For example, as illustrated in progression 1000A of FIG. 10, the starting marker 1002 and ending marker 1004 define an alternative content pod, where the video timeline 1006 is split. Interestingly, because when the in-scene secondary content only includes video and not audio or subtitles, the system can refrain from splitting the audio timeline 1008 and corresponding subtitle timeline 1010, creating processing efficiencies during the stitching process.

The video between the pod definition points is removed from the video timeline (block 814). For example, as illustrated in progression 1000B, the video between the starting marker 1002 and the ending marker 1004 is removed, while the audio and subtitles are retained in the audio timeline 1008 and subtitle timeline 1010.

The alternative content video indicted by the secondary content decisioning service 114 is inserted into the video timeline between the pod defining points (e.g., within the primary content playback manifest) (block 816). For example, in progression 1000C of FIG. 10, alternative content video 1012 is inserted in between starting marker 1002 and ending marker 1004 in the video timeline 1006, resulting in a stitched manifest that includes the alternative content video selected by the secondary content decisioning service 114.

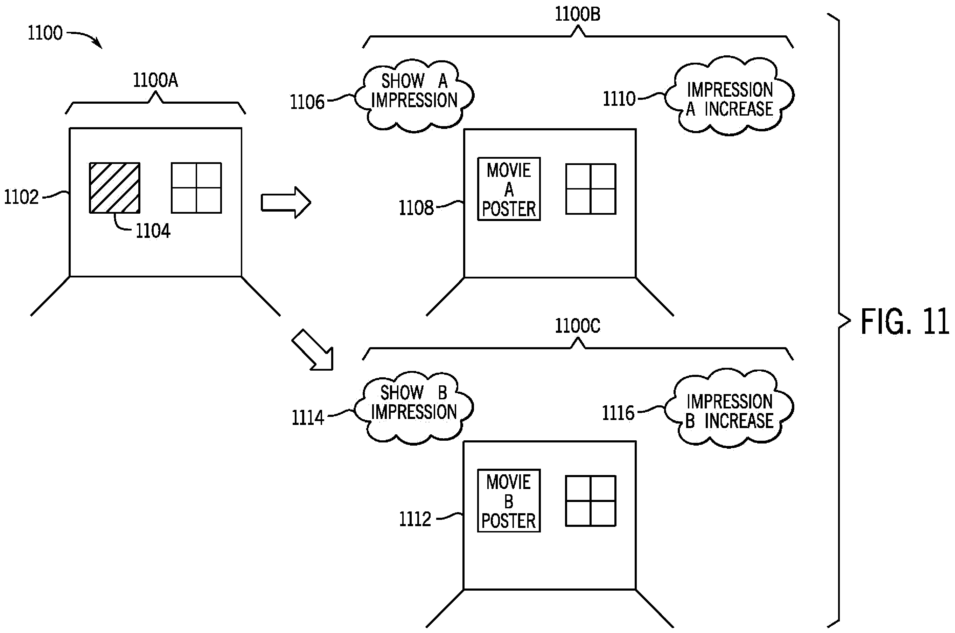

The manipulated manifest (e.g., stitched with the alternative content video) is provided to the player for playback (block 818). FIG. 11 is a schematic diagram, illustrating an example playback 1100 using dynamic secondary content insertion, in accordance with certain embodiments. In the playback 1100, at progression 1100A, primary content 1102 includes a scene with a first poster area 1104 where secondary content may be inserted. Accordingly, the frames including the scene are indicated as an alternative content opportunity location (e.g., via encoding of an ACO starting and ending markers defining the scene).

A first user may request playback of the primary content 1102. The first user and their playback session may be associated with first targeting data indicating an advertisement target of Movie A for the user. Thus, the secondary content decisioning service 114 may decide that secondary content associated with Movie A should be presented, as illustrated by decision cloud 1106 of progression 1100B. The secondary content decisioning service 114 may select alternative content 1108 that includes frames of the scene of primary content 1102 but altered for insertion of a Movie A poster. An indication of segments of the selected alternative content is stitched into the playback manifest, resulting in the alternative content 1108 being presented to the first user during playback of the primary content 1102. Because the alternative content 1108 is indicated as in-scene secondary content insertion, the player may record an impression once the alternative content is presented to the first user, as indicated by action balloon 1110.

In comparison, as illustrated in progression 1100C, when a second user requests playback of the primary content 1102 and the second user and their playback session are associated with targeting data that indicates Movie B is a target for the second user, the secondary content decisioning service 114 may select alternative content 1112 having Movie B poster inserted in-scene for presentation. This is illustrated by decision cloud 1114. The alternative content 1112 is stitched into the playback manifest of the second user, causing the alternative content 1112 to be presented with the primary content 1102. As discussed above, because the alternative content is indicated as a secondary content insertion (e.g., in-scene ad), an impression may be recorded by the content player, as indicted by action balloon 1116.

As may be appreciated, the current techniques provide quick and dynamic in-scene secondary content insertion. The techniques provided enable systems used for non-in-scene secondary content insertion to be expanded for use with in-scene secondary content insertion, creating new efficiencies and insertion capabilities.

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function] ... " or "step for [perform]ing [a function] ... ", it is intended that such elements are to be interpreted under 35 U.S.C. 112(f). However, for any claims containing elements designated in any other manner, it is intended that such elements are not to be interpreted under 35 U.S.C. 112(f).

## Claims

1. A tangible, non-transitory, computer-readable medium comprising computer-readable instructions that, when executed by one or more processors, of one or more computers, cause the one or more computers to:
receive primary content;
receive in-scene content insertion timings indicative of when alternative content is available in a timeline of the primary content; and
cause encoding of the primary content with alternative content opportunity markers indicating the in-scene content insertion timings.

2. The tangible, non-transitory computer-readable medium of claim 1, wherein the alternative content opportunity markers comprise a start time and an end time where alternative content comprising in-scene inserted secondary content may replace a portion of the primary content.

3. The tangible, non-transitory computer-readable medium of claim 1, comprising computer-readable instructions that, when executed by the one or more processors of the one or more computers, cause the one or more computers to:
identify one or more non-in-scene content insertion timings within the timeline of the primary content; and
cause the encoding of the primary content with a non-in-scene insertion marker different than the alternative content opportunity markers, the non-in-scene insertion marker indicating a time when non-in-scene secondary content may be inserted into the timeline of the primary content.

4. The tangible, non-transitory computer-readable medium of claim 3, wherein:
the alternative content opportunity markers comprising first Society of Cable Telecommunications Engineers, SCTE, markers comprising metadata indicating that the alternative content opportunity markers are alternative content opportunity markers; and
the non-in-scene insertion marker comprises a second SCTE marker different than the first SCTE markers, comprising metadata indicating that the non-in-scene insertion marker is a non-scene insertion marker.

5. The tangible, non-transitory computer-readable medium of claim 1, comprising computer-readable instructions that, when executed by the one or more processors of the one or more computers, cause the one or more computers to:
receive the in-scene content insertion timings from a secondary content creation service that creates alternative content that may replace a portion of the primary content that is within the alternative content opportunity markers.

6. The tangible, non-transitory computer-readable medium of claim 1, comprising computer-readable instructions that, when executed by the one or more processors of the one or more computers, cause the one or more computers to:
generate instant-video-ingest, IVI, metadata based upon received in-scene content insertion timings, the IVI metadata providing a sequence of secondary content insertion areas within a timeline of the primary content; and
provide the IVI metadata to a secondary content decisioning service, enabling the secondary content decisioning service to select secondary content to insert in the secondary content insertion areas during a subsequent playback of the primary content.

7. The tangible, non-transitory computer-readable medium of claim 1, wherein the alternative content opportunity markers, when identified during subsequent playback of the primary content, cause:
an alternative content clip to be selected for playback with the primary content; and
an indication of segments of the alternative content clip to be stitched into a playback manifest of a subsequent playback at a location in the playback manifest that is indicated by the alternative content opportunity markers.

8. The tangible, non-transitory computer-readable medium of claim 7, wherein the segments of the alternative content clip comprise video segments and not audio segments or subtitle segments.

9. The tangible, non-transitory computer-readable medium of claim 1, comprising computer-readable instructions that, when executed by the one or more processors of the one or more computers, cause the one or more computers to:
perform a frame-by-frame analysis to identify candidate portions of the primary content for insertion of alternative content; and
provide the primary content and the candidate portions of the primary content to a secondary content creation service to cause generation of the alternative content.

10. The tangible, non-transitory computer-readable medium of claim 9, comprising computer-readable instructions that, when executed by the one or more processors of the one or more computers, cause the one or more computers to:
receive the alternative content from the secondary content creation service; and
cause transcoding of the alternative content into one or more formats compatible with playback of the primary content.

11. The tangible, non-transitory, computer-readable medium of claim 1, further comprising computer-readable instructions that, when executed by one or more computers, cause the one or more computers to:
receive a request for playback of the primary content from a content player (108);
identify from the encoded primary content, the alternative content opportunity markers indicating a location where secondary content may be inserted;
determining whether the alternative content opportunity markers indicate an in-scene secondary content insertion location or a non-in-scene secondary content insertion location; and
in response to determining that the one or more markers indicate an in-scene secondary content insertion location, in a playback manifest:
split a timeline at pod definition points indicated by the one or more markers;
remove primary content segments between the pod definition points; and
insert alternative content segments comprising scenes of the removed primary content segments modified with in-scene inserted secondary content between the pod definition points; and
provide the playback manifest to the content player (108) for playback after the alternative content segments are inserted.

12. The tangible, non-transitory, computer-readable medium of claim 11, comprising computer-readable instructions that, when executed by the one or more computers, cause the one or more computers to:
in response to determining that the alternative content opportunity markers indicate a non-in-scene secondary content insertion location, in the playback manifest:
split the timeline at the alternative content opportunity markers;
extend a portion of the timeline by a length of the secondary content; and
insert, in the extended portion of the timeline, segments of the secondary content.

13. The tangible, non-transitory, computer-readable medium of claim 12, wherein the timeline that is split comprises a video timeline, and an audio timeline when the alternative content opportunity markers indicate a non-in-scene secondary content insertion location; wherein the timeline that is split comprises a video timeline without an audio timeline when the alternative content opportunity markers indicate an in-scene secondary content insertion location.

14. The tangible, non-transitory, computer-readable medium of claim 11, wherein the request for playback of the primary content from the content player (108) comprises targeting data, and wherein the tangible, non-transitory, computer-readable medium further comprises computer-readable instructions that, when executed by the one or more computers, cause the one or more computers to select the alternative content segments based on the targeting data.

15. A computer-implemented method, comprising:
receiving primary content;
receiving in-scene content insertion timings indicative of when alternative content is available in a timeline of the primary content; and
causing encoding of the primary content with alternative content opportunity markers indicating the in-scene content insertion timings.
